Europäisches Patentamt

European Patent Office

Office européen des brevets

(19)

(11) Veröffentlichungsnummer : **0 116 905**
**B1**

(12) **EUROPÄISCHE PATENTSCHRIFT**

(45) Veröffentlichungstag der Patentschrift :
20.01.88

(21) Anmeldenummer : 84101324.6

(22) Anmeldetag : 09.02.84

(51) Int. Cl.⁴ : **C 11 D 1/28, C 11 D 3/20,
C 11 D 1/72, C 11 D 11/04**

(54) Verwendung von Alkoholderivaten als Viskositätsregler für hochviskose technische Tensid-Konzentrate.

(30) Priorität : 17.02.83 DE 3305430

(43) Veröffentlichungstag der Anmeldung :
29.08.84 Patentblatt 84/35

(45) Bekanntmachung des Hinweises auf die Patenterteilung : 20.01.88 Patentblatt 88/03

(84) Benannte Vertragsstaaten :
AT BE CH DE FR IT LI NL SE

(56) Entgegenhaltungen :
EP-A- 0 008 060
EP-A- 0 084 154
DE-A- 2 163 195

(73) Patentinhaber : Henkel Kommanditgesellschaft auf
Aktien
Postfach 1100 Henkelstrasse 67
D-4000 Düsseldorf-Holthausen (DE)

(72) Erfinder : Schmid, Karl-Heinz, Dr.
Stifterstrasse 10
D-4020 Mettmann (DE)
Erfinder : Rommerskirchen, Hans Josef
Saganer Weg 21
D-4000 Düsseldorf (DE)
Erfinder : Reuter, Herbert, Dr.
Gerresheimer Strasse 276
D-4010 Hilden (DE)
Erfinder : Seiter, Wolfgang, Dr.
Lorbeerweg 7
D-4040 Neuss 21 (DE)
Erfinder : Piorr, Robert, Dr.
Kieselei 12
D-4030 Ratingen-Hösel (DE)

EP 0 116 905 B1

0 116 905

**Beschreibung**

Bei der Herstellung von pulverförmigen oder körnigen Wasch- und Reinigungsmitteln nach dem im großtechnischen Maßstab gebräuchlichen Heißsprühverfahren geht man von wäßrigen Aufschlämmungen (« Slurry » genannt) aus, die einen großen Teil der Waschmittelbestandteile oder auch alle Waschmittelbestandteile enthalten. Unter wirtschaftlichen Gesichtspunkten ist es wichtig, daß der Slurry möglichst reich an Waschmittelbestandteilen, d. h. möglichst arm an flüssigen Ballaststoffen ist. Man verwendet zum Ansetzen des Slurries daher die geringstmögliche Wassermenge. Der Konzentrierung sind aber Grenzen durch die höchstmögliche Viskosität, bei welcher der Slurry gerade noch verarbeitet werden kann, gesetzt. Ein wesentlicher Bestandteil der meisten Wasch- und Reinigungsmittel sind anionische Tenside, die bei der Herstellung des Waschmittel-Slurries meist als pastenförmige Konzentrate in Form ihrer Alkali- oder Ammoniumsalze eingesetzt werden. Der Tensidgehalt technischer Konzentrate liegt zum Beispiel im Fall von $\alpha$-Sulfotalgfettsäuremethylester bei ca. 30 Gew.-%. Pasten mit höherem Tensidgehalt lassen sich aber nicht mehr verarbeiten.

Eine Besonderheit im rheologischen Verhalten von Tensidkonzentraten besteht darin, daß sie auf die Zugabe von Wasser nicht mit einer Viskositätsverminderung, sondern zunächst mit einer Verdickung zu einem gelartigen Zustand reagieren, woraus für den Verarbeiter weitere Probleme erwachsen. Beispielsweise ist es häufig nicht einfach, gebildete Gelklumpen wieder in Lösung zu bringen, oder es verstopfen Ventile von Pumpen und Behältern.

Zur Lösung dieser Probleme sind verschiedene Vorschläge bekannt geworden. In der DE-OS 2 251 405 beispielsweise werden die Salze bestimmter Carbonsäuren, insbesondere Hydroxycarbonsäuren als Viskositätsregulatoren beschrieben. Nach der Lehre der DE-OS 2 305 554 sind sulfonierte aromatische Verbindungen für diese Zwecke geeignet. Die DE-OS 2 326 006 nennt Sulfate oder Sulfonate von aliphatischen, gegebenenfalls substituierten Kohlenwasserstoffen als Viskositätsregulatoren. Auch der Zusatz von niederen Alkanolen wird als Möglichkeit zur Viskositätsverminderung in den genannten Druckschriften aufgeführt. Ferner wird der Zusatz der altbekannten Hydrotrope wie zum Beispiel Cumolsulfonat, oder von sauren Phosphorsäureestern (DE-AS 1 617 160) oder von mehrwertigen Alkoholen, bestimmten Carbonsäuren und/oder Estern dieser Verbindungen beschrieben (EP-OS 8 060). Aus der europäischen Offenlegungsschrift Nr. 24 711 ist bekannt, zur Verbesserung des Fließverhaltens von anionischen Tensidkonzentraten Sulfate von bestimmten Polyalkyletherglykolen zuzusetzen. Aus der DE-PS 1 418 887 ist bekannt, einen nach der Sulfonierung von Fettsäuren oder deren Ester in der Rohsulfonsäure verbleibenden $SO_3$-Überschuß zu entfernen, indem man das überschüssige $SO_3$ mit stöchiometrischen bis überschüssigen Mengen an mit $SO_3$ zu kapillaraktiven Substanzen leicht reagierenden Verbindungen, darunter aliphatische Alkohole und Anlagerungsprodukte von Ethylenoxid und/oder Propylenoxid an derartige Alkohole, umsetzt. Dieser Patentschrift ist aber kein Hinweis darauf zu entnehmen, wie man mit einem Sulfonierungsprodukt, welches kein oder nahezu kein überschüssiges $SO_3$ enthält, verfährt, um die Viskosität des Tensidkonzentrates zu senken.

Manche der in der Literatur genannten Zusätze wirken nicht bei allen Tensid-Konzentraten, andere müssen in hoher Konzentration eingesetzt werden, und wieder andere, wie niedere Alkanole, erniedrigen den Flammpunkt der Konzentrate.

Aufgabe der vorliegenden Erfindung ist daher die Bereitstellung von Substanzen zur Verbesserung des Fließverhaltens von wäßrigen technischen Aniontensid-Konzentraten, so daß diese in höheren Konzentrationen als bisher verarbeitbar sind bzw. beim Verdünnen mit Wasser kein Ansteigen der Viskosität aufweisen. Die Viskositätsregulierung ist für Konzentrate von $\alpha$-Sulfofettsäureestern ein besonderes Problem, da bereits Konzentrate mit mehr als etwa 30 Gew.-% Tensidgehalt nicht mehr gut verarbeitbar sind. Ohne das Viskositätsproblem wäre es technisch möglich, Tensidkonzentrate mit bis zu etwa 80 Gew.-% Tensidgehalt herzustellen. Die Viskositätsverminderung von $\alpha$-Sulfofettsäureester-Konzentraten ist daher ein besonderes Ziel der vorliegenden Erfindung.

Die Lösung der erfindungsgemäßen Aufgabe besteht in der Verwendung von Alkoholen mit 8 bis 40 Kohlenstoffatomen, die zusätzlich eine oder mehrere Hydroxylgruppen als Substituenten aufweisen und/oder an die pro Mol Alkohol bis zu 15 Mol Ethylenoxid und/oder Propylenoxid angelagert sind, als Viskositätsregler für hochviskose technische Tensidkonzentrate vom Typ der synthetischen anionischen Tenside aus der Gruppe der Alkylsulfate, Alkylarylsulfate und alpha-Sulfofettsäureestern mit mindestens 30 Gew.-% Tensidgehalt, insbesondere der alpha-Sulfofettsäureester mit mindestens 50 Gew.-% des Na-Salzes von $\alpha$-Sulfofettsäureester, wobei man den Viskositätsregler in Mengen von 1-15 Gew.-%, bezogen auf die Tensidmenge, dem ganz oder weitestgehend von überschüssigem Sulfonierungsmittel befreiten Sulfonierungsprodukt zusetzt, wobei sich eine Viskosität des Tensidkonzentrates von höchstens 10 000 mPas bei 70 °C einstellt. D. h., man kann die Viskosität der Konzentrate bei der jeweiligen Verarbeitungstemperatur, d. h. bei der Temperatur, bei der die Tensidkonzentrate hergestellt, gepumpt, mit anderen Waschmittelbestandteilen vermischt oder versprüht werden, was man im allgemeinen zwischen 60 und 90 °C, beispielsweise bei 70 °C vornimmt, auf eine für eine Verarbeitung geeignete Viskosität von höchstens 10 000 mPas (Höppler-Kugelfallviskosimeter) vermindern.

Ein weiterer, sehr wesentlicher Vorteil der erfindungsgemäßen Verwendung besteht darin, daß man bei der technischen Herstellung der Tensidkonzentrate den Tensidgehalt auf Werte von mindestens etwa 50 Gew.-% einstellen kann, ohne daß die Viskosität die für die Verarbeitbarkeit zulässige Obergrenze von etwa 10 000 mPas übersteigt, wodurch Tensidkonzentrate mit geringerem Wasserballast erhalten werden. Schließlich haben die meisten der im folgenden näher beschriebenen, als Viskositätsregler geeigneten Verbindungen kapillaraktive Eigenschaften, die sich beim Einsatz der Tensidkonzentrate in Waschmitteln durch erhöhte Waschkraft der Waschmittel auswirken.

Als Viskositätsregler geeignete Alkohole sind, z. B., Anlagerungsprodukte von bis zu 15 Mol Ethylenoxid und/oder Propylenoxid an aliphatische Alkohole mit 8 bis 40 Kohlenstoffatomen.

Die aliphatischen Alkohole leiten sich beispielsweise von natürlichen Fetten und Ölen ab. Diese sogenannten Fettalkohole sind geradkettig und können gesättigt oder ungesättigt sein. Besonders wirksame und daher bevorzugte Viskositätsregler sind Gemische aus gesättigten und ungesättigten Fettalkoholen, an die man bis zu 8 Mol Ethylenoxid und/oder Propylenoxid angelagert hat. Beispiele für die genannten Fettalkohol-Gemische sind Cetyl-/Oleylalkoholgemische, die zu wenigstens 80 Gew.-% aus Fettalkoholen mit 16 bis 18 Kohlenstoffatomen bestehen und eine Jodzahl von 40 bis 100 aufweisen. Lagert man an ein derartiges Gemisch pro Mol Alkohol zunächst 1 Mol Propylenoxid und dann 6 Mol Ethylenoxid an, erhält man einen ausgezeichnet wirksamen Viskositätsregler. Als Viskositätsregler geeignete aliphatische Alkohole bzw. Anlagerungsprodukte können aber auch eine verzweigte Kohlenstoffkette in der Alkoholkomponente aufweisen. Beispiele für Alkohole mit verzweigter Kohlenstoffkette sind Oxo-Alkohole und Guerbet-Alkohole, d. h. durch Oxo-Synthese oder durch die sogenannte Guerbet-Reaktion erhaltene, jeweils in 2-Stellung verzweigte Alkohole. Durch die Guerbet-Reaktion erhält man als Ergebnis einer intermolekularen Kondensation von Alkohol bei Temperaturen über 200 °C in Gegenwart von Natrium oder Kupfer verzweigte Alkohole, deren Seitenkette um 4 Kohlenstoffatome kürzer ist als deren Hauptkette. Besonders wirksam sind Alkohole mit verzweigter Kohlenstoffkette, an die bis zu 15 Mol Ethylenoxid und/oder Propylenoxid angelagert wurden. Typische Vertreter für derartige Verbindungen sind ein $C_{14}/C_{15}$-Oxoalkohol-Gemisch, an das 7 Mol Ethylenoxid angelagert wurden und das durch Guerbet-Reaktion erhaltene 2-Octyldodecanol, an das 15 Mol Ethylenoxid angelagert wurden. Andere ebenfalls gut wirksame und daher bevorzugte Viskositätsregler leiten sich von aliphatischen Alkoholen ab, die mit 1 bis 5 Hydroxylgruppen substituiert sind. Typische Vertreter hierfür sind 12-Hydroxystearylalkohol, der sich von Rizinusöl ableitet, und 9,10-Dihydroxystearylalkohol, der sich von Ölsäure ableitet. Auch die Anlagerungsverbindungen von 10 Mol Ethylenoxid an 12-Hydroxystearylalkohol und von 15 Mol Ethylenoxid an 9,10-Dihydroxystearylalkohol sind ausgezeichnet wirksame und daher bevorzugte Vertreter dieser Verbindungsklasse.

Die genannten Viskositätsregler setzt man den Aniontensid-Konzentraten, also beispielsweise den Alkylsulfaten, d. h. den Alkali- oder Ammoniumsalzen der Schwefelsäureester von aliphatischen $C_8$- bis $C_{14}$-Alkoholen, den Alkylarylsulfonaten, d. h. Sulfonierungsprodukten von vorwiegend $C_4$- bis $C_{16}$-Alkylbenzol sowie insbesondere den $\alpha$-Sulfofettsäureester-Konzentraten, vorzugsweise in Mengen von ca. 10 Gew.-%, insbesondere von 5-12 Gew.-%, bezogen auf die Tensidmenge zu, wobei man durch die Menge des zugesetzten Viskositätsreglers die gewünschte Viskositätserniedrigung bestimmt. Man kann dabei so vorgehen, daß man aus Aniontensid-Pulver, also insbesondere $\alpha$-Sulfofettsäureesterpulver und Wasser unter Zusatz des Viskositätsreglers das Tensid-Konzentrat herstellt. Von größerer praktischer Bedeutung ist aber die folgende Verfahrensweise : Man sulfoniert Fettsäureester mit gasförmigen, im allgemeinen mit Inertgas verdünntem $SO_3$ im Überschuß, entfernt beispielsweise durch Separieren das überschüssige freie $SO_3$ nach der Sulfonierung vollständig oder insbesondere weitestgehend, d. h. bis auf einen Rest von höchstens 10 Mol-%, setzt den Viskositätsregler zu und neutralisiert die Rohsulfonsäure mit konzentrierter wäßriger Alkalimetallhydroxidlösung, wobei sich ein Tensidkonzentrat mit beispielsweise 50 Gew.-% Tensidgehalt und einer Viskosität von weniger als 10 000 mPas bei 70 °C ergibt. Dieses Konzentrat kann bei Bedarf gebleicht werden. Setzt man zusammen mit dem Viskositätsregler zusätzlich 0,5 bis 5 Gew.-%, bezogen auf das neutralisierte Sulfonierungsprodukt, wasserlösliche Alkali- oder Erdalkalimetallsalze, insbesondere Alkalimetallchlorid, vorzugsweise Natriumchlorid zu, verstärkt man die viskositätssenkende Wirkung des Viskositätsreglers in den meisten Fällen deutlich. Die Zugabe von Natriumchlorid ist daher bevorzugt. Enthält das neutralisierte Sulfonierungsprodukt bereits wasserlösliche Erdalkali- oder Alkalimetallsalze in der genannten Konzentration, beispielsweise von einer vorangegangenen Bleichung mit Hypochloritsalz-Lösung, so kann ein weiterer Zusatz von wirkungssteigernden Salzen unterbleiben.

Die $\alpha$-Sulfofettsäureester, zu deren Konzentraten man die genannten Viskositätsregler insbesondere einsetzt, leiten sich von Fettsäuren mit 10 bis 20, vorzugsweise 12 bis 18 Kohlenstoffatomen und von aliphatischen Alkoholen mit 1 bis 10, vorzugsweise 1 bis 4 Kohlenstoffatomen im Molekül ab. Außer durch Sulfonierung eines entsprechenden Fettsäureesters kann die Einführung der Sulfogruppe auch durch Sulfonierung der Fettsäure und anschließende Veresterung der Carboxylgruppe mit Alkohol erfolgen. Nach beiden Verfahren werden Ester von Sulfofettsäuren erhalten, bei denen die Sulfosäuregruppe in $\alpha$-Stellung steht. Besonders geeignete $\alpha$-Sulfofettsäureester sind die Alkali- oder Ammoniumsalze des Ethyl- und insbesondere des Methylesters von Talgfettsäure mit einer Sulfogruppe in $\alpha$-Stellung, wobei die Säurekomponente der Fettsäureester im wesentlichen aus gesättigten $C_{16}$- und $C_{18}$-Fettsäuren besteht.

Beispiele

3

## Beispiele 1 bis 4

Pulverförmiges α-Sulfotalgfettsäuremethylester-Natriumsalz auf Basis hydrierter Talgfettsäure, das man durch vorsichtiges Eindampfen eines technischen wäßrigen Konzentrats erhalten hatte und das ca. 5 Gew.-% Dinatriumsalz (« Di-Salz ») enthielt, wurde mit Wasser zu einer 50 gew.-%igen Paste vermischt. Die Viskosität dieser Paste lag über 50 000 mPas bei 70 °C (Höppler-Viskosimeter). Setzt man dieser Paste 10 Gew.-%, bezogen auf den Feststoff, der erfindungsgemäß zu verwendenden Viskositätsregler zu, erhielt man Produkte mit der in der folgenden Tabelle 1 aufgeführten Viskosität.

Tabelle 1

| Nr. | Viskositätsregler (10 Gew.-%) | Viskosität mPas 70 °C |
|---|---|---|
| 1 | ohne | über 50 000 |
| 2 | Cetyl-/Oleylalkohol-Gemisch, Jodzahl 53 + 5 Mol Ethylenoxid | 1 490 |
| 3 | Cetyl-/Oleylalkohol-Gemisch, Jodzahl 53 + 7,2 Mol Ethylenoxid | 1 900 |
| 4 | Cetyl-/Oleylalkohol-Gemisch, Jodzahl 53 + 8 Mol Ethylenoxid | 4 000 |

Die in Tabelle 1 aufgezeigten Werte zeigen die drastische Viskositätssenkung bei Verwendung von Ethoxylaten eines Gemisches aus gesättigtem und ungesättigtem Fettalkohol mit bis zu etwa 8 Mol angelagertem Ethylenoxid (Beispiele 2 bis 4).

## Beispiele 5 bis 9

Pulverförmiges, mit Natriumhypochlorit gebleichtes α-Sulfotalgfettsäuremethylester-Natriumsalz auf Basis hydrierter Talgfettsäure, das ca. 2 Gew.-% Natriumchlorid und 20 Gew.-% « Di-Salz » enthielt, wurde mit Wasser zu einer ca. 50 gew.-%igen Paste vermischt. Die Viskosität dieser Paste lag bei 50 000 mPas (70 °C). Setzte man dieser Paste 10 Gew.-%, bezogen auf Feststoff, Alkoholethoxylate mit verzweigter Kohlenstoffkette in der Alkoholkomponente zu, erhielt man Produkte mit der in Tabelle 2 aufgeführten Viskosität. Diese Tabelle enthält auch die Viskosität eines Produktes auf derselben α-Sulfofettsäureester-Basis, das als Viskositätsregler teilweise ungesättigte Alkohole, an die man zuerst 1 Mol Propylenoxid und dann 6 Mol Ethylenoxid pro Mol Alkohol-Gemisch angelagert hatte, enthielt (Beispiel 8). Außerdem enthält die Tabelle 2 die Viskosität von Produkten, die teilweise ungesättigte Alkohole, an die Ethylenoxid angelagert war, als Viskositätsregler enthielten (Beispiel 9).

Tabelle 2

| Nr. | Viskositätsregler (10 Gew.-%) | Viskosität mPas 70 °C |
|---|---|---|
| 5 | ohne | 50 000 |
| 6 | $C_{14}$-/$C_{15}$-Oxoalkohol + 7 Mol Ethylenoxid | 340 |
| 7 | 2-Octyldodecanol + 15 Mol Ethylenoxid | 590 |
| 8 | Cetyl-/Oleylalkohol-Gemisch, Jodzahl 53 + 1 Mol Propylenoxid + 6 Mol Ethylenoxid | 370 |
| 9 | Talgfettalkohol + 5 Mol Ethylenoxid | 1 210 |

0 116 905

Die Beispiele 6 und 7 zeigen die außerordentlich gute Wirksamkeit von Alkohol-Ethoxylaten mit verzweigter Kohlenstoffkette der Alkoholkomponente. Beispiel 8 steht für teilweise ungesättigte Alkohole, an die bis zu 8 Mol Ethylenoxid/Propylenoxid angelagert wurden, und das Beispiel 9 für ein teilweise ungesättigtes Fettalkohol-Ethoxylat, jeweils in Kombination mit Natriumchlorid.

## Beispiele 10 bis 12

Die folgenden Beispiele zeigen die Wirkung von je einem Alkandiol und Alkantriol, an die Ethylenoxid angelagert wurde. Als Tensid-Konzentrat wurde das Konzentrat der Beispiele 5 bis 9 verwendet. Tabelle 3 enthält die Viskosität der Produkte.

Tabelle 3

| Nr. | Viskositätsregler, (10 Gew.-%) | Viskosität mPas, |
|---|---|---|
| 10 | ohne | 50 000 |
| 11 | 12-Hydroxystearylalkohol + 10 Mol Ethylenoxid | 227 |
| 12 | 9,10-Dihydroxystearylalkohol + 15 Mol Ethylenoxid | 340 |

## Beispiel 13

Verwendete man in einem vollkontinuierlichen technischen Prozess die Viskositätsregler, indem man verdünntes $SO_3$ im Überschuß auf Talgfettsäuremethylester bei erhöhter Temperatur einwirken ließ, dann die bei Bedarf gebleichte und nahezu $SO_3$-freie Rohsulfonsäure mit konzentrierter wäßriger Natriumhydroxid-Lösung unter Zudosierung von 10 Gew.-% des Viskositätsreglers neutralisierte, erhielt man mit den Beispielen 1 bis 4 vergleichbare Ergebnisse.

## Beispiel 14

Verfuhr man wie in Beispiel 13, wobei man aber mit der Natriumhydroxid-Lösung und dem Viskositätsregler gleichzeitig 2 Gew.-% Natriumchlorid als konzentrierte wäßrige Lösung zudosierte, erhielt man mit den Beispielen 5 bis 9 vergleichbare Ergebnisse, d. h. auch bei kontinuierlicher Herstellung ca. 50 gew.-%iger α-Sulfofettsäuremethylester-Konzentrate verstärkt ein Zusatz von geringen Mengen Natriumchlorid die Wirkung der Viskositätsregler auf Basis längerkettiger Alkohole.

### Patentansprüche

1. Verwendung von Alkoholen mit 8 bis 40 Kohlenstoffatomen, die mit 1 bis 5 Hydroxylgruppen substituiert sind und/oder an die pro Mol Alkohol bis zu 15 Mol Ethylenoxid und/oder Propylenoxid angelagert sind, als Viskositätsregler für hochviskose technische Tensid-Konzentrate vom Typ der synthetischen anionischen Tenside aus der Gruppe der Alkylsulfate, Alkylarylsulfate und alpha-Sulfofettsäureestern mit mindestens 30 Gew.-% Tensidgehalt, insbesondere der alpha-Sulfofettsäureester mit mindestens 50 Gewichtsprozent des Na-Salzes von Alpha-Sulfofettsäureester, wobei man den Viskositätsregler in Mengen von 1 bis 15 Gewichtsprozent, bezogen auf die Tensidmenge, dem ganz oder weitestgehend von überschüssigem Sulfonierungsmittel befreiten Sulfonierungsprodukt zusetzt, wobei sich eine Viskosität des Tensid-Konzentrates von höchstens 10 000 mPas bei 70 °C einstellt.

2. Verwendung nach Anspruch 1, dadurch gekennzeichnet, daß man Gemische aus gesättigten und ungesättigten Fettalkoholen, an die man bis zu 8 Mol Ethylenoxid und/oder Propylenoxid angelagert hat, verwendet.

3. Verwendung nach Anspruch 2, dadurch gekennzeichnet, daß man ein Gemisch aus Fettalkoholen, das zu wenigstens 80 Gewichtsprozent aus Fettalkohol mit 16 bis 18 Kohlenstoffatomen besteht und an die man 1 Mol Propylenoxid und 6 Mol Ethylenoxid angelagert hat, verwendet.

4. Verwendung nach Anspruch 1, dadurch gekennzeichnet, daß man Alkohole mit verzweigter Kohlenstoffkette und mit bis zu 15 Mol Ethylenoxid und/oder Propylenoxid verwendet.

5. Verwendung nach Anspruch 1, dadurch gekennzeichnet, daß man substituierte Fettalkohole, an

5

die man 10 bis 15 Mol Ethylenoxid angelagert hat, verwendet.

6. Verwendung nach den Ansprüchen 1 bis 5, dadurch gekennzeichnet, daß man sulfonierte Fettsäureester, die man weitestgehend von überschüssigem $SO_3$ befreit hat, in Gegenwart von Viskositätsreglern neutralisiert.

7. Verwendung nach Anspruch 6, dadurch gekennzeichnet, daß man die Neutralisation mit wäßriger Alkalimetallhydroxid-Lösung, vorzugsweise Natriumhydroxid-Lösung, vornimmt und zusätzlich zu dem Viskositätsregler ein anorganisches Salz, vorzugsweise Natriumchlorid in Mengen von 0,5 bis 5 Gewichtsprozent, bezogen auf das neutralisierte Sulfonierungsprodukt, zusetzt.

## Claims

1. The use of $C_8$-$C_{40}$ alcohols which are substituted by 1 to 5 hydroxyl groups and/or onto which up to 15 moles ethylene oxide and/or propylene oxide have been added per mole alcohol as viscosity regulators for highly viscous technical surfactant concentrates based on synthetic anionic surfactants from the group comprising alkyl sulfates, alkyl aryl sulfates and α-sulfofatty acid esters containing at least 30 % by weight surfactant, more especially α-sulfofatty acid esters containing at least 50 % by weight of the Na salt of α-sulfofatty acid ester, the viscosity regulator being added to the sulfonation product completely or very largely freed from excess sulfonating agent in quantities of from 1 to 15 % by weight, based on the quantity of surfactant, adjusting the viscosity of the surfactant concentrate to a value of at most 10 000 mPa.s at 70 °C.

2. The use claimed in Claim 1, characterised in that mixtures of saturated and unsaturated fatty alcohols onto which up to 8 moles ethylene oxide and/or propylene oxide have been added are used.

3. The use claimed in Claim 2, characterised in that a mixture of fatty alcohols of which at least 80 % by weight consists of $C_{16}$-$C_{18}$ fatty alcohol and onto which 1 mole propylene oxide and 6 moles ethylene oxyde have been added are used.

4. The use claimed in Claim 1, characterized in that alcohols having a branched carbon chain and containing up to 15 moles ethylene oxide and/or propylene oxide are used.

5. The use claimed in Claim 1, characterised in that substituted fatty alcohols onto which from 10 to 15 moles ethylene oxide have been added are used.

6. The use claimed in Claims 1 to 5, characterized in that sulfonated fatty acid esters which have been very largely freed from excess $SO_3$ are neutralized in the presence of viscosity regulators.

7. The use claimed in Claim 6, characterized in that an àqueous alkali metal hydroxide solution, preferably a sodium hydroxide solution, is used for neutralization and an inorganic salt, preferably sodium chloride, is added in addition to the viscosity regulator in quantities of from 0.5 to 5 % by weight, based on the neutralized sulfonation product.

## Revendications

1. Utilisation d'alcools à 8 à 40 atomes de carbone, qui sont constitués par 1 à 5 groupes hydroxyl, et/ou sur lesquels sont ajoutés par addition, par molécule d'alcool, jusqu'à 15 moles d'oxyde d'éthylène et/ou d'oxyde de propylène, comme régulateurs de la viscosité pour des concentrés industriels de tensio-actifs à haute viscosité, du type des tensio-actifs anioniques synthétiques du groupe des sulfates d'alcoyle, sulfates d'alcoylaryle et esters d'acides gras α-sulfonés, avec une teneur minimum en tensio-actifs de 30 % en poids, en particulier l'ester d'acide gras α-sulfoné comportant au moins 50 % en poids du sel de sodium de l'ester d'acide gras α-sulfoné, le régulateur de viscosité étant ajouté dans des proportions de 1 à 15 % en poids, calculé sur la quantité d'agents tensio-actifs, au produit de la sulfonation d'où l'on a éliminé, totalement ou dans une très large mesure tout excès d'agent de sulfonation, à la suite de quoi il s'établit, à 70 °C, une viscosité du concentré de tensio-actif qui est au maximum de 10 000 mPas.

2. Utilisation suivant la revendication 1, caractérisée en ce que l'on utilise des mélanges d'alcools gras saturés ou insaturés, sur lesquels on a déposé, par addition, jusqu'à 8 moles d'oxyde d'éthylène et/ou d'oxyde de propylène.

3. Utilisation suivant la revendication 2, caractérisée en ce que l'on utilise un mélange d'alcool gras qui est constitué d'au moins 80 % en poids d'alcools gras à 16 à 18 atomes de carbone, et sur lesquels on a déposé par addition 1 mole d'oxyde de propylène et 6 mol d'oxyde d'éthylène.

4. Utilisation suivant la revendication 1, caractérisée en ce que l'on utilise des alcools à chaîne carbone ramifiée et portant jusqu'à 15 mol d'oxyde d'éthylène et/ou d'oxyde de propylène.

5. Utilisation suivant la revendication 1, caractérisée en ce que l'on utilise des alcools gras substitués, sur lesquels on a déposé par addition 10 à 15 mol d'oxyde d'éthylène.

6. Utilisation suivant les revendications 1 à 5, caractérisée en ce que l'on neutralise en présence de régulateurs de viscosité, des esters d'acides gras sulfonés, dont on a éliminé dans une très large mesure le $SO_3$ en excès.

7. Utilisation suivant la revendication 6, caractérisée en ce que l'on effectue la neutralisation avec une solution aqueuse d'un hydroxyde de métal alcalin, avantageusement d'une solution d'hydroxyde de sodium, et ajoute supplémentairement au régulateur de viscosité un sel minéral, de préférence du chlorure de sodium, dans des proportions de 0,5 à 5 % en poids, calculé sur le produit de sulfonation neutralisé.